# EUROPÄISCHE PATENTSCHRIFT

(11) **EP 0 788 970 B1**
(45) Veröffentlichungstag und Bekanntmachung des Hinweises auf die Patenterteilung: **23.04.2003**
(21) Anmeldenummer: 96112911.1
(22) Anmeldetag: 10.08.1996
(51) Int. Cl.: B64D 11/06, B60N 2/06

(54) **Sitzgruppe, insbesondere in einer Passagierkabine eines Flugzeuges**
Seating unit, specially for the passenger cabin of an aircraft
Ensemble de sièges, en particulier pour une cabine d'avion

(30) Priorität: 14.09.1995 DE 19534024
(43) Veröffentlichungstag der Anmeldung: 13.08.1997
(73) Patentinhaber: Airbus Deutschland GmbH, 21129 Hamburg (DE)
(72) Erfinder: Schumacher, Markus, 21614 Buxtehude (DE); Muin, Andrew, 21614 Buxtehude (DE)
(74) Vertreter: Hansmann, Dierk, Dipl.-Ing.

(56) Entgegenhaltungen:
- EP-A- 0 322 930
- EP-A- 0 658 477
- DE-A- 3 512 954
- FR-A- 2 226 808
- GB-A- 2 280 363
- GB-A- 2 285 748
- US-A- 4 679 749
- PATENT ABSTRACTS OF JAPAN vol. 008, no. 032 (M-275), 10.Februar 1984 & JP 58 188726 A (TENRIYUU KOGYO KK), 4.November 1983,

## Beschreibung

Die Erfindung betrifft eine Sitzgruppe, insbesondere in einer Passagierkabine eines Flugzeuges, mit einem Traggestell, das mehrere Sitze trägt, die jeweils aus Sitzteil und Rückenlehne bestehen, und die Sitze über mindestens eine gemeinsame Führungsschiene querverschieblich sind.

Herkömmliche Passagiersitze für Flugzeuge haben ein Traggestell mit einer fest darauf angeordneten Sitzfläche und einer im Bereich der Hinterkante der Sitzfläche angeordnete Rückenlehne. Im Flugzeug bilden die Passagiersitze vorzugsweise Sitzreihen, wobei zwei oder mehrere nebeneinander angeordnete Passagiersitze zu einer Sitzgruppe zusammengefaßt sein können, die von einem gemeinsamen Traggestell getragen werden. Beidseitig des jeweiligen Sitzteils sind Armlehnen angeordnet. Die Sitzgruppen sind als starre Einheiten für die Montage in den Passagierkabinen der Flugzeuge vorgesehen. Entsprechend der Anforderung der Airlines kann es dabei zu unterschiedlichen Konfigurationen kommen, wobei vorrangig eine größtmögliche Sitzkapazität angestrebt wird.

Das führt zu recht beengten Sitzverhältnissen für die Flugpassagiere. Ein weiterer Nachteil in einer Passagierkabine mit einer hohen Sitzanzahl besteht darin, daß aufgrund der schmalen Kabinenlängsgänge - auch Verkehrsfläche genannt - zwischen den Sitzreihen das Ein- und Austeigen der Passagiere einen hohen Zeitaufwand erfordert. Es entstehen vor allem Stockungen, wenn die Passagiere zum Verstauen des Handgepäcks im Gang stehen bleiben, wodurch dieser blockiert wird. Zum Aneinandervorbeigehen zweier Fluggäste sind die Kabinengänge zu schmal. Ein weiteres Problem ergibt sich aufgrund der schmalen Gänge auch bei der Passagierversorgung und beim Durchführen der Reinigungsarbeiten.
Diese Bodenzeit zwischen den Flügen - auch "Turnaround"-Zeit genannt - ist für die Wirtschaftlichkeit eines Verkehrsflugzeuges von maßgeblicher Bedeutung. Es ist somit notwendig, trotz einer hohen Sitzbelegung in der Passagierkabine, die Verkehrsfläche so zu gestalten, daß ein schnelles Ein- und Aussteigen der Passagiere ermöglicht und der Zeitaufwand für notwendige Bodenarbeiten minimiert wird. Die zu Sitzgruppen zusammengefaßten Passagiersitze sind dabei so zu gestalten, daß ein komfortables Sitzen für die an Bord mitreisenden Passagiere gewährleistet ist.
Aus dem Stand der Technik sind dafür Sitzeinheiten bekannt, die querverschieblich ausgebildet sind. In EP 06 58 477 A1 ist eine Tragkonstruktion für eine Sitzgruppe vorgeschlagen, die eine Querverschiebung von sitzverbindenden Tragelementen zwischen zwei Endstellungen ermöglicht. Es ist möglich, die gesamte Sitzgruppe entlang einer Verschiebeachse zu bewegen. An vorbestimmten Stellen sind an der Tragkonstruktion Mitnahmeanschläge angeordnet, die sicherstellen, daß die sitzverbindenden Tragelemente auf eine vorher gewählte Entfernung mitgenommen werden können.
Auch aus GB 22 80 363 A ist eine Sitzgruppe für den Passagiertransport in Flugzeugen bekannt, die zwischen zwei Endstellungen ihre Breite ändern kann. Mit einem Griff, der an der gangseitigen Armlehne angeordnet ist, können die Abstände der Sitze verändert werden, die auf einer gemeinsamen Führungsbahn verschieblich sind.
In beiden Lösungen kann die Sitzverschiebung nur vom Begleitpersonal und nur für alle Sitze der Sitzgruppe vorgenommen werden. Damit ist vor Flugantritt eine rasche Einstellung auf die jeweils geltende Belegung der Sitze, beispielsweise als Tourist-Class oder Business-Class, erreicht. An eine Verbreiterung der Kabinenlängsgänge und damit eine Vergrößerung der Verkehrsfläche für ein schnelles Ein- und Aussteigen der Passagiere ist aber nicht gedacht, da zum Zeitpunkt des Einsteigens bereits die entsprechende Sitzbreite eingestellt ist und erst nach dem Ausstieg der Passagiere - als Vorbereitung für den nächsten Flug - erneut eine Veränderung der Sitzeinstellungen vorgenommen wird.

In EP 0 322 930 A2 ist eine Sitzgruppe vorgeschlagen, gemäß den Oberbegriffen des Ansprüche 1 und 10. Die Tragkonstruktion für die Sitzgruppe vorsieht eine Abstandsveränderung zwischen Sitzen einer Sitzgruppe. So ist es erreichbar, dass eine Umwandlung einer Dreier-Sitzgruppe in eine Zweier-Sitzgruppe oder umgekehrt zur Anpassung an eine Touristclass-Konfiguration bzw. Businessclass-Konfiguration erfolgen kann ohne Teile zu entfernen oder hinzuzufügen. Mittels ineinander verschieblicher Tragrohre des Sitzgestells können die Abstände der Sitze verändert werden. Die Sitzverschiebung ist nur vom Begleitpersonal vorzunehmen und das entsprechende Betätigungselement ist deshalb seitlich an unauffälliger Stelle am Sitzgestell angeordnet. Es ist ein bewusster, zusätzlicher Betätigungsakt durch das Personal notwendig, um eine Konfigurationsänderung durchzuführen.

In Verkehrsflugzeugen ist somit im Kabinenbereich eine flexible Umrüstung von Sitzen zur Änderung der Klassenkonfigurationen bekannt und als Problem gelöst, jedoch eine kurzzeitige, d.h. zeitlich begrenzte Sitzbreitenverstellung, um ein schnelleres Ein- und Aussteigen der Passagiere zu ermöglichen, ist für eine Sitzgruppe eines Passagierflugzeuges bisher nicht bekannt.

Demgemäß liegt der Erfindung die Aufgabe zugrunde, eine Sitzgruppe der Eingangs genannten Art zu schaffen, die eine variable Anpassung der Sitze und ein komfortables Sitzen der im Flugzeug mitreisenden Passagiere ermöglicht und gleichzeitig für das Ein- und Aussteigen der Passagiere eine merkliche Vergrößerung der Verkehrsfläche erreicht, die somit durch Verkürzung der notwendigen Bodenzeit des Flugzeuges die Wirtschaftlichkeit desselben erheblich verbessert.

Diese Aufgabe wird mit den in Patentanspruch 1 bzw. im Patentanspruch 10 angegebenen Maßnahmen gelöst.

Dabei ist insbesondere von Vorteil, daß nicht genutzte Sitze durch geeignete Maßnahmen "schrumpfen" und so der gewonnene Platz der Verkehrsfläche der Kabine zugute kommt. Ein Ein- und Aussteigen der Passagiere kann somit effektiver gestaltet werden. Darüber hinaus wird erreicht, daß die Kabinenreinigung und weitere notwendige Bodenarbeiten leichter und schneller durchgeführt werden können und somit die Wirtschaftlichkeit eines Flugzeuges erheblich verbessert ist.

Weiterbildungen und zweckmäßige Ausgestaltungen ergeben sich aus den Unteransprüchen 2 - 9.

Mit der Ausgestaltung gemäß Anspruch 2 und 3 ist auf einfache Weise realisiert, daß Sitze auf dem Traggestell in Querrichtung leicht zusammenschiebbar sind. Mit der Kopplung von Armlehne und Nutwelle, die mit den anliegenden Sitzrahmen in Verbindung steht, wird beim Hochklappen der Armlehne der zugehörige Sitzrahmen auf der Führungsschiene verschoben. Damit ist ein breiterer Passagiergang erreicht. Die Sitzbreitenänderung eines Sitzes kann durch Einwirkung eines Passagieres selbst erfolgen, der sich beispielsweise durch Herunterklappen der Armlehne eine bequemere Sitzbreite schafft.

Die Ausbildung gemäß Anspruch 4 ermöglicht eine weitere Vergrößerung der Verkehrsfläche für die "Turnaround"-Zeit. Die betreffenden Passagiere können die durch das Hochklappen der Sitzteile geschaffene Freifläche für das Be- und Entladen der oberhalb der Sitze angeordneten Gepäckablagen nutzen und somit den Längsgang für das Ein- und Aussteigen der Passagiere frei lassen. Darüber hinaus wird für die Kabinenreinigung eine erhebliche Arbeitserleichterung erreicht. Die Bodenfläche ist zum Reinigen besser einsehbar und erreichbar.

Die Maßnahme gemäß Anspruch 5 ermöglicht, daß ebenfalls die Armlehne zwangsgeführt hochklappt, wenn der Sitz hochschwenkt. Damit ist ein Hängenbleiben an Armlehnen bei hochgeschwenkten Sitzteilen verhindert. Ein Hochklappen der Armlehne ohne das Hochschwenken des Sitzteiles ist auf einfache Weise ebenfalls möglich. Der Sitzkomfort für die Passagiere ist somit erheblich verbessert.

Mit der Ausführung gemäß Anspruch 6 wird erreicht, daß beim Zusammenschieben der Sitze auf dem Traggestell kein Platzverlust aufgrund von hochgeklappten Armlehnen auftritt. Die Armlehnen sind in ihrer hochgeklappten Position in die Rückenlehne integriert.

Die Maßnahme gemäß Anspruch 7 ermöglicht einen einfachen Aufbau des Traggestells der Sitzgruppe.

Die Ausgestaltungen gemäß der Maßnahmen nach Anspruch 8 bzw. 9 ermöglicht ein weiteres Verkleinern einer nicht genutzten Sitzfläche. Nur bei Belastung durch einen Passagier erhält das Sitzteil seine vorgesehene Breite. Im unbelasteten Zustand ist er entsprechend der vorgesehenen Vorspannung des Federgestells bzw. des Sitzpolsters schmaler.

Die Erfindung wird nachstehend beschrieben, wobei die Vorrichtung anhand des in der Zeichnung dargestellten Ausführungsbeispieles näher erläutert ist.
Die Zeichnung zeigt
- in Fig. 1: eine perspektivische Darstellung einer Flugzeugkabine mit einer Sitzgruppe in einer ersten Ausgestaltung,
- in Fig. 2: eine perspektivische Darstellung eines Führungselementes,
- in Fig. 3: eine perspektivische Darstellung einer Koppeleinrichtung,
- in Fig. 4: eine zweite Ausgestaltung einer Sitzgruppe in einer Passagierkabine,
- in Fig. 5: ein mit einem Gepäckfach versehenes Sitzteil,
- in Fig. 6: eine dritte Ausgestaltung einer Sitzgruppe und
- in Fign. 7, 8: eine Perspektivdarstellung der in Fig. 6 gezeigten Ausgestaltung der Sitzgruppe mit Einzelheiten.

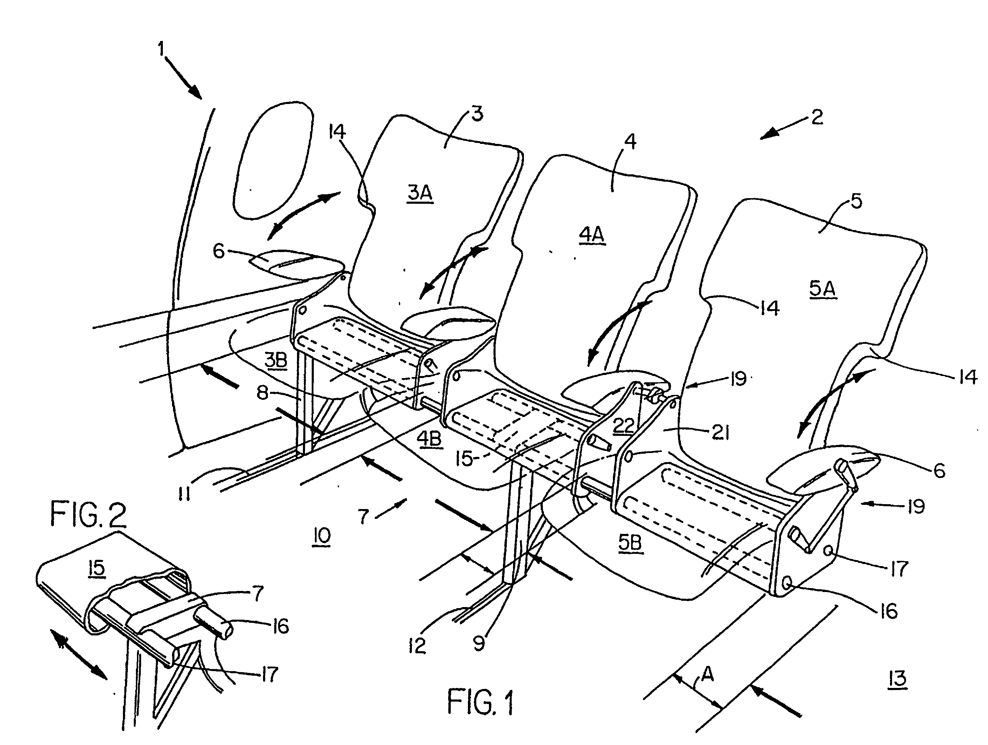

Die Fig. 1 zeigt eine Flugzeugkabine 1 mit einer Sitzgruppe 2 in einer ersten Ausgestaltung. Die Sitzgruppe 2 besteht aus mehreren, nebeneinander angeordneten Sitzen 3, 4 und 5, die an einem gemeinsamen Traggestell 7 angebracht sind. Der jeweilige Sitz besteht aus Sitzteil 3B, 4B oder 5B und Rückenlehne 3A, 4A, 5A. Jedem Sitz sind Armlehnen 6 zugeordnet. Gestellbeine 8, 9 des Traggestelles 7 sind am Fußboden 10 in Sitzschienen 11, 12 fixiert. Das Traggestell 7 mit den darauf angebrachten Sitzen kann somit innerhalb der Flugzeugkabine 1 recht einfach montiert werden. Das in der Sitzschiene 11 fixierte Gestellbein 8 befindet sich vorteilhaft in Nähe der Kabinenwand (Fensterseite) und das in der Sitzschiene 12 fixierte Gestellbein 9 ungefähr mittig der Sitzgruppe 2. Das hat den Vorteil, daß der Fußraum im Gangbereich 13 so wenig wie möglich eingeschränkt wird. Die genaue Lage des Gestellbeines 9 ist von der notwendigen Lastaufnahme des Traggestelles 7 abhängig. Dementsprechend ist das Traggestell 7 auszulegen und die genaue Lage des Gestellbeines 9 zu bestimmen.

Erfindungsgemäß ist es möglich, die Sitze 3, 4 und 5 auf dem starren Traggestell 7 in Richtung Kabinenwand zu verschieben. Dazu sind an den Sitzen Mittel zum Querverschieben vorgesehen. Vorgesehen ist eine Koppeleinrichtung 19, die mittels einer Relativbewegung eines sitzspezifischen Bauteiles, beispielsweise einer sitzzugeordneten Armlehne 6 den jeweiligen Sitz 3, 4 oder 5 auf dem Traggestell 7 verschieblich gestaltet. Die Breite der Sitzfläche des jeweiligen Sitzes ergibt sich üblicherweise aus der Breite des Sitzpolsters und der Breite der dazugehörigen Armlehne oder Armlehnen. Eine Verschiebung der Sitzteile 3, 4 oder 5 in Querrichtung ist möglich, da die entsprechenden Sitzquerabstände verkleinert werden können, wenn der Passagier seinen Sitzplatz noch nicht beansprucht oder ein Sitz gar nicht benutzt wird. In diesem Fall können die Lücken zwischen den Sitzen, die für die Armlehnen vorgesehen sind und üblicherweise die Sitze trennen, geschlossen werden. Damit ist eine Verminderung der Sitzgruppenbreite um die für die Armlehnen vorgesehenen Lükken erreicht. Falls es für einen ausreichend breiten Gang genügt, kann innerhalb einer Sitzgruppe nur der jeweils gangseitige Sitz querverschieblich ausgebildet sein. Damit würde die gewonnene Breite ungefähr der Breite einer Armlehne entsprechen. Mit der möglichen Zuordnung jeweils einer Koppeleinrichtung 19 zu dem entsprechenden Sitz 3, 4 oder 5 kann für jeden Sitz unabhängig vom benachbarten Sitz die zur Verfügung stehende Breite geändert werden.
In der Ausgestaltung gemäß Fig. 1 wird ein um den Abstand A vergößerte Gangbreite erreicht, die für das Ein- und Aussteigen der Passagiere, Reinigungsarbeiten und Cateringarbeiten erhebliche Zeitvorteile mit sich bringt.
Eine Steigerung des Sitzkomforts kann erreicht werden, wenn die Armlehnen 6 hochschwenkbar ausgestaltet sind. Somit kann bei nur teilweiser Besetzung der Sitzgruppen mit Passagieren die trennende Armlehne 6 verschwinden und die zwischen den Sitzen klaffende Lücke geschlossen werden. Die Rückenlehne 5A ist dafür mit Aussparungen 14 - gezeigt am Sitz 5 - versehen, in denen die hochgeschwenkten Armlehnen 6 einschwenken können. Eine Sitzgruppe bildet in dieser Position der Sitze (nicht gezeigt) eine geschlossene Sitz- und Lehnfläche, was insbesondere bei nicht voll besetzten Sitzreihen oder Flügen mit Kindern, die die Sitzfläche als durchgängige Liegefläche zum Schlafen nutzen können, einen erheblichen Platzvorteil bietet und ein bequemeres Unterbringen der Passagiere ermöglicht.

Die Querverschiebung der Sitze 3, 4 und 5 wird realisiert mit Führungselementen 15, die dem jeweiligen Sitz zugeordnet sind und unterhalb der Sitzteile 3B, 4B oder 5B befestigt sind. Die Führungselemente 15 verlaufen in mindestens einer ortsfest zum Traggestell 7 angeordneten gemeinsamen Führungschiene.

Die Führungschiene besteht, wie in Fig. 2 detailliert dargestellt, aus zwei Tragrohren 16, 17 auf denen Führungselemente 15 entlanggleiten können. Die Tragrohre 16, 17 können vorzugsweise als Teleskoprohre ausgebildet sein, um eine Verkürzung der Tragrohre 16, 17 um den Abstand A bei zusammengeschobenen Sitzen 4, 5 und 6 zu ermöglichen. Das entsprechende Führungselement 15 des Sitzes 4 ist beispielhaft dargestellt und umhüllt die beiden Tragrohre 16, 17 in der in Fig. 2 gezeigten Weise.

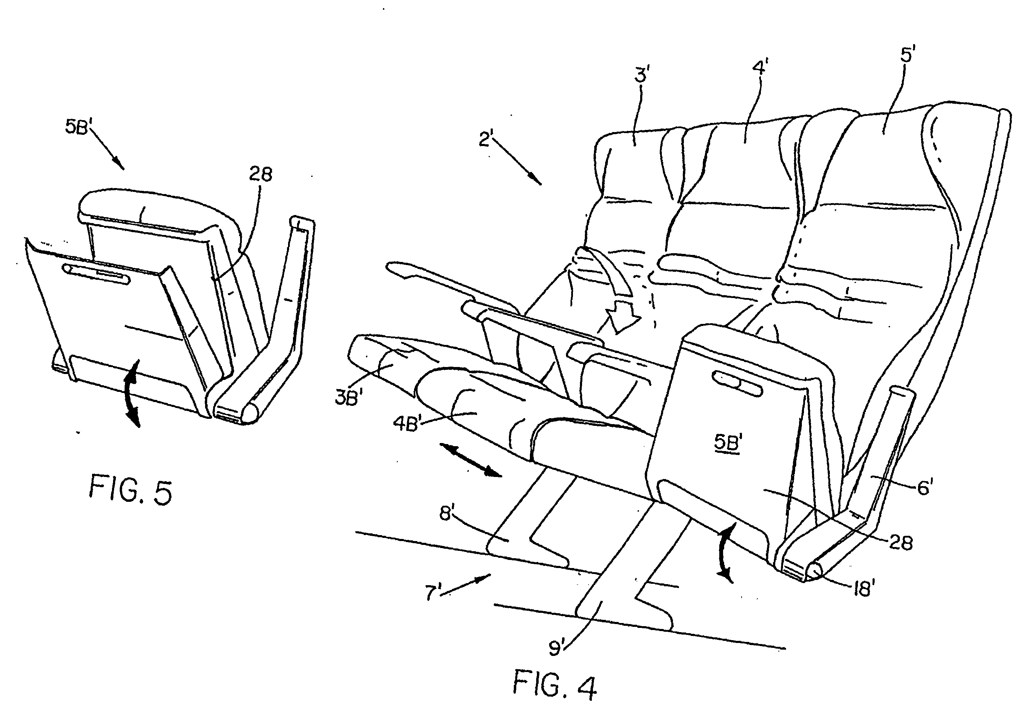

Eine weitere vorteilhafte Ausgestaltung zur Erhöhung der Verkehrsfläche ist mit der Maßnahme erreicht, das Sitzteil hochschwenkbar auszugestalten. Ein hochgeschwenkter Sitz ist in Fig. 4 ersichtlich, die eine zweite Ausgestaltung einer Sitzgruppe 2' zeigt. So kann erreicht werden, daß die betreffenden Passagiere die durch das Hochklappen der Sitzteile geschaffene Freifläche für das Be- und Entladen der oberhalb der Sitze angeordneten Gepäckablagen nutzen und somit der Längsgang für das Ein- und Aussteigen der Passagiere frei bleibt. Die Schwenkachse 18' ist in Nähe der Hinterkante des Sitzteiles 5B' ortsfest zum Traggestell 7' angeordnet. Mit dem Hochschwenken des Sitzteiles 5B' wird vorteilhaft die dazugehörige Armlehne 6' mitgeführt.

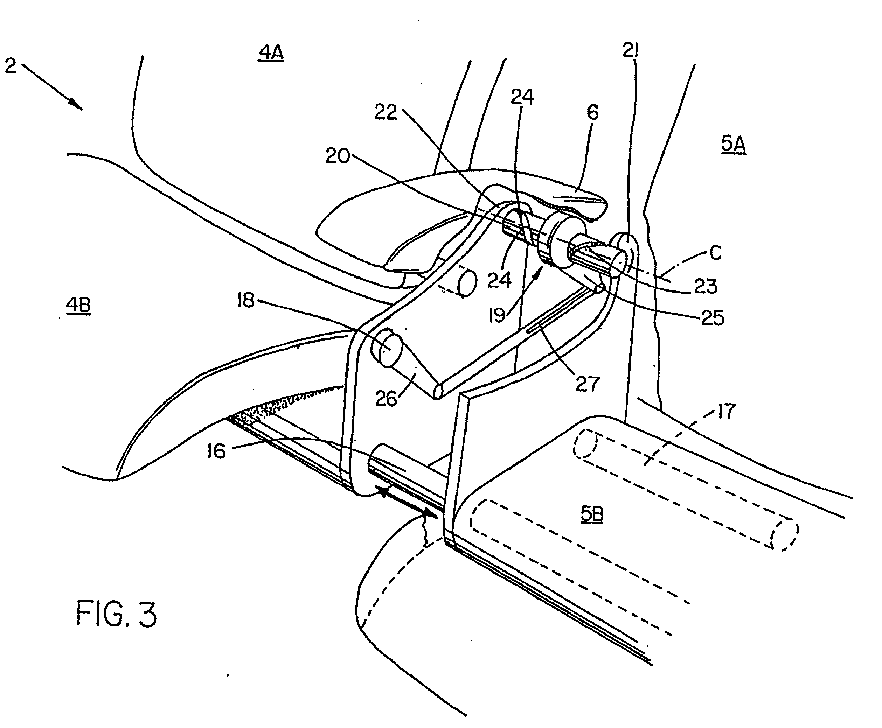

In Fig. 3 ist eine mögliche Ausführungsform der Koppeleinrichtung 19 an der ersten Ausgestaltung der Sitzgruppe 2 gemäß Fig. 1 dargestellt, die eine Kombination der bisher genannten Maßnahmen zur Verbesserung der Verkehrsfläche realisiert. Zwischen dem hochschwenkbaren Sitz, den hochschwenkbaren Armlehnen und dem Mittel zum Querverschieben besteht eine Wirkverbindung, die wie folgt funktioniert und beispielhaft an Sitz 4 gezeigt wird.
Das hintere Ende der Armlehne 6 ist mit einer Nutwelle 20 verbunden. Durch Hochschwenken der Armlehne 6 um eine Achse C in Richtung Rückenlehne 4A, ohne das das Sitzteil 4B hochgeschwenkt wird, bewegt sich die Nutwelle 20 ebenfalls um die Achse C. Ein Verbindungselement (nicht gezeigt) eines jeweiligen Sitzrahmens 21 und 22 des Sitzes 4 und 5 wird durch die Drehung innerhalb der spiralförmigen Nut 23 oder 24 entlang der Nutwelle 20 bewegt. Die Sitzrahmen 21 und 22 der beiden anliegenden Sitzteile 4B und 5B werden durch diese Bewegung zusammengeführt. Die Lücke zwischen den Sitzen 4 und 5 ist somit geschlossen. Bei einer Abwärtsbewegung der Armlehne 6 in seine Normalposition werden die Sitzrahmen 21 und 22 wieder auseinanderbewegt. Die Nutwelle 20 ist mit einem Lehnenhebel 25 verbunden, dessen freies Ende die Verbindung zu einem winkelförmigen Sitzhebel 26 herstellt. Der winkelförmige Sitzhebel 26 ist im vorderen Bereich an einer Seite des Sitzrahmens 22 befestigt. Das entgegengesetzte Ende des Sitzhebels 26 enthält eine Kulisse 27, in der das freie Ende des Lehnenhebels 25 geführt ist. Die Kulisse 27 ist vorzugsweise als Langloch ausgebildet. Bei einer Bewegung der Armlehne 6 ohne Schwenken des Sitzteiles 4B ist das freie Ende des Lehnenhebels 25 in der Kulisse 27 frei bewegbar, sodaß eine Kraftübertragung zwischen Sitzhebel 26 und Lehnenhebel 25 nicht zustande kommt.
Wenn ein Hochschwenken des Sitzteiles 4B erfolgen soll, zieht der im vorderen Bereich des Sitzrahmens 22 befestigte Sitzhebel 26 den Lehnenhebel 25 nach vorn in Richtung Vorderkante des Sitzteiles 4B. Der Lehnenhebel 25 dreht um die Achse C und bewegt so gleichzeitig die Nutwelle 20 um dieselbe Achse C. Mit dem Hochklappen des Sitzteiles 4B um eine Schwenkachse 18 werden somit die Sitzrahmen 21 und 22 zusammengeführt und die Armlehne 6 in Richtung Rückenlehne 4A hochgeklappt.

Die in der Fig. 4 ersichtliche zweite Ausgestaltung der Sitzgruppe 2' zeigt, die Sitze 3', 4' und 5', die auf einem Traggestell 7' angeordnet sind, wobei als Führungsschiene der querverschieblichen Sitze 3', 4', 5' gleichzeitig die Schwenkachse 18' dient. Unterhalb des Sitzteiles 5B' ist ein Gepäckfach 28 vorgesehen. In diesem Fach können Kleingegenstände, Handtaschen oder ähnliches untergebracht sein. Eine Zugänglichkeit des Gepäckfaches 28 ist möglich bei hochgeklapptem Zustand des Sitzteiles 5B', wie aus der Fig. 5 ersichtlich ist.

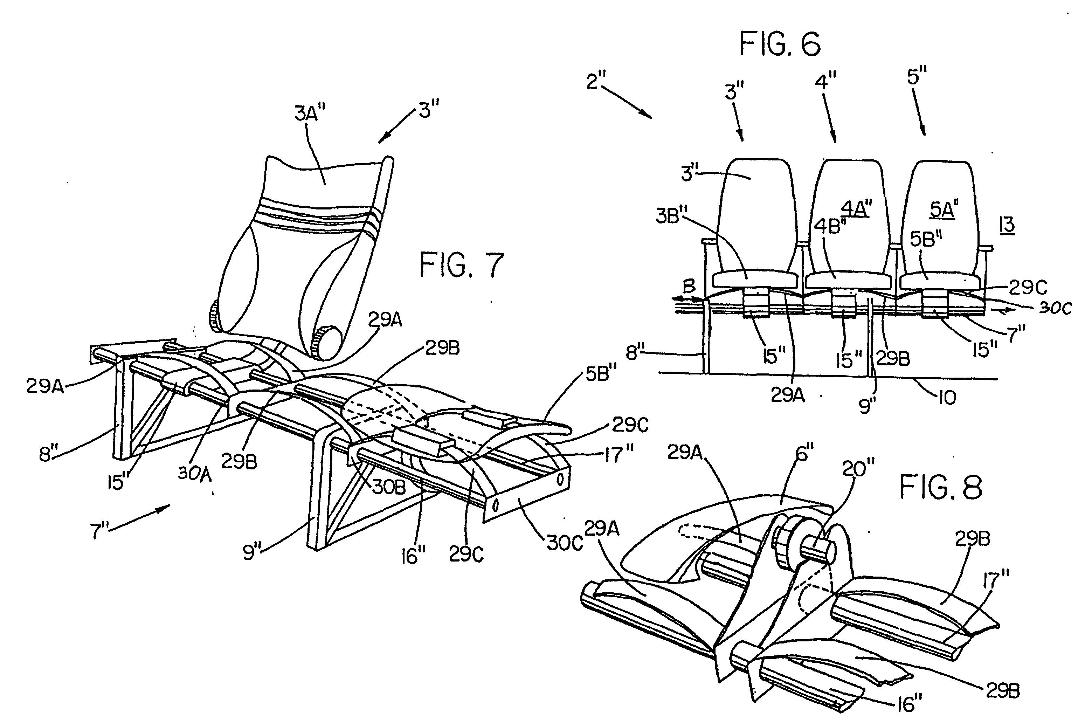

In der Fig. 6 ist eine dritte Ausgestaltung einer Sitzgruppe 2" dargestellt. Die Sitze 3", 4" und 5" der Sitzgruppe 2" sind im unbelasteten Zustand gezeigt und besitzen noch nicht die vorgesehene Sitzflächenbreite.
Unterhalb der Sitzteile 3B", 4B" oder 5B" ist jeweils ein aus Blattfedern bestehendes Federgestell 29A, 29B oder 29C als Sitzrahmen vorgesehen, welches bei einer Belastung mit der Gewichtskraft eines Passagieres den entsprechenden Sitz in Pfeilrichtung verbreitert. Es sind auch Sitzpolster mit federähnlichen Eigenschaften denkbar, die sich ebenfalls bei einer Belastung verbreitern. Mit dieser Maßnahme ist eine Verbreiterung der Sitzgruppe 2" um die Breite B möglich. Damit kann von vornherein eine größere Gangbreite vorgesehen werden und erst im belasteten Zustand ist die volle Breite der Sitzgruppe 2" vorhanden und der Gang 13 auf seine ursprüngliche Breite reduziert.
Zur Realisierung dieser Maßnahme ist eine Querverschieblichkeit der Sitze auf dem Traggestell 7" erforderlich. Anhand der Fign. 6 und 7 wird der Funktionsablauf der Querverschieblichkeit dargestellt.
In Fig. 7 ist die Anordnung der Federgestelle 29A, 29B und 29C in Verbindung mit dem Traggestell 7'' ersichtlich. Die Federgestelle 29A, 29B und 29C sind so ausgeführt, daß sie mittels Führungselementen 15" auf Tragrohren 16" und 17" relativ bewegbar sind. Wenn beispielsweise nur ein Passagier den Sitz 3" benutzt, verbreitert sich das Federgestell 29A um die dafür vorgesehene Breite. Mit dem Gestellbein 8" ist eine Seite des Federgestells 29A fest verbunden. In der als Führungssteg 30A ausgebildeten gegenüberliegenden Seite des Federgestells 29A verschieben sich die Tragrohre 16'' und 17" um die Querausdehnung des Federgestells 29A in Pfeilrichtung gemäß Fig. 6 in Richtung des Ganges 13. Die Federgestelle 29B und 29C auf den Tragrohren 16" und 17" werden mit den daran befestigten Sitzen ebenfalls um diese Querausdehnung in Gangrichtung verschoben. Die gangseitigen Enden der Tragrohre 16'' und 17" sind mit dem gangseitigen als Führungssteg 30C ausgebildeten Ende des Federgestells 29C verbunden. Die Tragrohre 16" und 17" sind um die Breite B relativ zum Sitzgestell 7" verschiebbar. So stören bei einer "zusammengeschobenen" Sitzgruppe 2" auch die Tragrohre 16" und 17" nicht im Gangbereich 13. Sie sind um die Länge B in Fensterrichtung verschoben.

In der Fig. 8 ist eine perspektivische Darstellung einer Kopplung von Armlehne 6" und Federgestell 29A und 29B mittels der Nutwelle 20" gezeigt. Mit dem Hochklappen der Armlehne 6" werden die Federgestelle 29A und 29B zusammengeschoben, was den Sitzkomfort erheblich verbessert. Die zwischen den Federgestellen 29A und 29B vorhandenen Lücken können geschlossen werden, wenn die Sitze nicht belegt sind und die Armlehnen keine Bedeutung haben. Die Wirkungsweise von Nutwelle 20" in Verbindung mit der Armlehne 6" und Sitzrahmen (Federgestellen) 29A und 29B ist der in Fig. 3 gezeigten und beschriebenen Anordnung gleich.

## Patentansprüche

1. Sitzgruppe in einer Passagierkabine eines Flugzeuges, bestehend aus der Kombination folgender Merkmale:
- die Sitzgruppe weist ein Traggestell (7) auf, das mehrere Sitze (3, 4, 5) trägt, die jeweils aus Sitzteil (3B, 4B, 5B) und Rückenlehne (3A, 4A, 5A) bestehen,
- die Sitze (3, 4, 5) sind über mindestens eine gemeinsame Führungsschiene (16, 17) querverschieblich ausgebildet zur temporären Veränderung der Flugzeuggangbreite,
- eine Koppeleinrichtung (19) ist an mindestens einem Sitzteil (3B, 4B oder 5B) vorgesehen, und steht mit einem an dem jeweiligen Sitzteil (3B, 4B oder 5B) angeordneten Führungselement (15) in Wirkverbindung; die Betätigung der Koppeleinrichtung (19) erfolgt durch eine Relativbewegung eines Funktionsteiles (6; 3B, 4B, 5B) des Sitzes (3,4,5) wobei das Führungselement (15) mit dem zugeordneten Sitz auf der korrespondierenden Führungsschiene (16,17) bewegbar ist, und wobei das Funktionsteil (6; 3B, 4B, 5B) im Handlungsbereich eines Passagiers angeordnet ist zur zeitlich begrenzten Verstellung der Sitzbreite eines zur Benutzung vorgesehenen Sitzes einer Sitzgruppe, **dadurch gekennzeichnet, daß** die Betätigung der Koppeleinrichtung eine direkte Bewegung des Sitzes (3,4,5) auf der Führungsschiene (16, 17) bewirkt.

2. Sitzgruppe nach Anspruch 1,
**dadurch gekennzeichnet, dass**
das Funktionsteil als eine sitzzugeordnete, schwenkbare Armlehne (6) ausgebildet ist.

3. Sitzgruppe nach Anspruch 1,
**dadurch gekennzeichnet, dass**
die Koppeleinrichtung (19) im wesentlichen besteht aus einer Nutwelle (20), deren Mittelteil mit dem hinteren Bereich der Armlehne (6) fest verbunden ist, die Wellenenden mit umlaufenden Nuten (23, 24) versehen sind, in den Nuten (23, 24) korrespondierende Verbindungselemente zu Sitzrahmen (21, 22, 29A, 29B) verlaufen, die bei einer Drehung der Armlehne (6) infolge einer Drehung der Nutwelle (20) eine Lageverschiebung der Sitzrahmen (21, 22) bewirken.

4. Sitzgruppe nach einem der Ansprüche 1 bis 3,
**dadurch gekennzeichnet, dass**
das Sitzteil (3B, 4B, 5B) hochschwenkbar ist, wobei die Schwenkachse (18) in Nähe der Hinterkante des Sitzteils ortsfest zum Traggestell (7) angeordnet ist.

5. Sitzgruppe nach Anspruch 4, wenn abhängig von Anspruch 3,
**dadurch gekennzeichnet, dass**
zwischen hochschwenkbarem Sitzteil (3B, 4B, 5B) und der Koppeleinrichtung (19) eine Wirkverbindung (25, 26, 27) vorgesehen ist, wobei im wesentlichen die Nutwelle (20) mit einem Lehnenhebel (25) verbunden ist, das freie Ende des Lehnenhebels (25) in einer Kulisse (27) geführt ist, die Kulisse (27) an einem Ende eines winkelförmigen Sitzhebels (26) angeordnet ist und das andere Ende des Sitzhebels (26) sich im vorderen Bereich einer Seite des Sitzrahmens (22) abstützt.

6. Sitzgruppe nach einem der Ansprüche 2 bis 5, wenn abhängig von Anspruch 2,
**dadurch gekennzeichnet, dass**
die Rückenlehne (3A, 4A, 5A) mit Aussparungen (14) versehen ist, in denen sich die Armlehnen (6) in hochgeschwenkter Position einfügen.

7. Sitzgruppe nach einem der Ansprüche 1 bis 6,
**dadurch gekennzeichnet, dass**
die Führungsschiene (16, 17) aus einem oder mehreren Tragrohren besteht.

8. Sitzgruppe nach einem der Ansprüche 1 bis 7,
**dadurch gekennzeichnet, dass**
am Sitzteil (3B, 4B, 5B) ein Federgestell (29A, 29B, 29C), vorzugsweise mit Blattfedern versehen, vorgesehen ist.

9. Sitzgruppe nach einem der Ansprüche 1 bis 8,
**dadurch gekennzeichnet, dass**
das Sitzteil (3B, 4B, 5B) ein Sitzpolster mit federähnlichen Eigenschaften aufweist.

10. Sitzgruppe in einer Passagierkabine eines Flugzeuges, mit einem Traggestell (7), das mehrere Sitze (3,4,5) trägt, die jeweils aus Sitzteil (3B,4B,5B) und Rückenlehne (3A,4A,5A) bestehen, und die Sitze (3,4,5) über mindestens eine gemeinsame Führungsschiene (16,17) querverschieblich sind, **dadurch gekennzeichnet, dass** zumindest unterhalb eines Sitzteils (3B, 4B, 5B) ein Federgestell (29A, 29B, 29C), vorzugsweise mit Blattfedern versehen, vorgesehen ist, welches mit einem sitzzugeordneten Führungselement (15) verbunden ist und bei Federbelastung eine direkte Bewegung des Sitzes auf der Führungsschiene (16, 17) bewirkt.

## Claims

1. Group of seats in a passenger cabin of an aircraft, consisting of the combination of the following features:
- the group of seats has a carrying framework (7) which carries a number of seats (3, 4, 5) which each consist of a seat part (3B, 4B, 5B) and a backrest (3A, 4A, 5A),
- the seats (3, 4, 5) are constructed so as to be transversely displaceable via at least one common guide rail (16, 17) for the purpose of temporarily varying the breadth of the aircraft gangway,
- a coupling apparatus (19) is provided on at least one seat part (3B, 4B or 5B) and is in operative connection with a guide element (15) disposed on the particular seat part (3B, 4B or 5B); actuation of the coupling apparatus (19) takes place by a relative movement of a functional part (6; 3B, 4B, 5B) of the seat (3, 4, 5), the guide element (15) being movable, with the associated seat, on the corresponding guide rail (16, 17) and the functional part (6; 3B, 4B, 5B) being disposed within a passenger's active reach for the temporally limited adjustment of the seat breadth of a seat intended for use and belonging to the group of seats, **characterised in that** actuation of the coupling apparatus brings about a direct movement of the seat (3, 4, 5) on the guide rail (16, 17).

2. Group of seats according to claim 1,
**characterised in that**
the functional part is constructed as a pivotable armrest (6) associated with a seat.

3. Group of seats according to claim 1,
**characterised in that**
the coupling apparatus (19) essentially consists of a grooved shaft (20), the central part of which is fixedly connected to the rear region of the armrest (6), the shaft ends are provided with circumferential grooves (23, 24), and there run, in the grooves (23, 24), corresponding connecting elements to seat frames (21, 22, 29A, 29B) which, in the event of rotation of the armrest (6), bring about a positional displacement of the seat frame (21, 22) as a result of rotation of the grooved shaft (20).

4. Group of seats according to one of claims 1 to 3,
**characterised in that**
the seat part (3B, 4B, 5B) can be pivoted upwards, the pivoting spindle (18) being disposed in the vicinity of the rear edge of the seat part in a stationary manner in relation to the carrying framework (7).

5. Group of seats according to claim 4, when dependent upon claim 3,
**characterised in that**
an operative connection (25, 26, 27) is provided between the upwardly pivotable seat part (3B, 4B, 5B) and the coupling apparatus (19), under which circumstances, substantially, the grooved shaft (20) is connected to a rest lever (25), the free end of the rest lever (25) is guided in a connecting link (27), the connecting link (27) is disposed at one end of an angular seat lever (26), and the other end of the seat lever (26) is supported in the front region of one side of the seat frame (22).

6. Group of seats according to one of claims 2 to 5, when dependent upon claim 2,
**characterised in that**
the backrest (3A, 4A, 5A) is provided with clearances (14) in which the armrests (6) are inserted when in the upwardly pivoted position.

7. Group of seats according to one of claims 1 to 6,
**characterised in that**
the guide rail (16, 17) consists of one or more carrying tubes.

8. Group of seats according to one of claims 1 to 7,
**characterised in that**
a spring framework (29A, 29B, 29C), preferably provided with leaf springs, is provided on the seat part (3B, 4B, 5B).

9. Group of seats according to one of claims 1 to 8,
**characterised in that**
the seat part (3B, 4B, 5B) has a seat pad with springlike properties.

10. Group of seats in a passenger cabin of an aircraft, having a carrying framework (7) which carries a number of seats (3, 4, 5) which each consist of a seat part (3B, 4B, 5B) and backrest (3A, 4A, 5A), and the seats (3, 4, 5) are transversely displaceable via at least one common guide rail (16, 17),
**characterised in that**
there is provided, at least underneath a seat part (3B, 4B, 5B), a spring framework (29A, 29B, 29C) which is preferably provided with leaf springs and which is connected to a guide element (15) associated with a seat and brings about, in the event of spring loading, a direct movement of the seat on the guide rail (16, 17).

## Revendications

1. Ensemble de sièges d'une cabine d'avion, présentant les caractéristiques suivantes :
- l'ensemble de sièges est doté d'un cadre porteur (7) supportant plusieurs sièges (3,4,5) constitués chacun d'un élément de siège (3B, 4B, 5B) et d'un dossier (3A,4A, 5A),
- les sièges (3,4, 5) sont disposés de manière à pouvoir coulisser longitudinalement sur au moins un rail de guidage commun, afin de modifier temporairement la largeur du couloir de l'avion,
- un dispositif de couplage (19) a été prévu contre au moins un élément de siège et est solidaire avec un élément de guidage (15) disposé contre l'élément de siège (3B, 4B ou 5B), le dispositif de couplage (19) est actionné par mouvement relatif d'une partie fonctionnelle (6 ; 3B, 4B, 5B) du siège (3,4,5), l'élément de guidage pouvant être déplacé avec son siège sur le rail de guidage correspondant et la partie fonctionnelle (6 ; 3B, 4B, 5B) étant disposée dans la zone de mouvement d'un passager afin de modifier temporairement la largeur d'un siège d'un ensemble de sièges destiné à être utilisé, et
**caractérisé en ce que** le dispositif de couplage entraîne un déplacement direct du siège (3,4,5) sur le rail de guidage (16, 17).

2. Ensemble de sièges selon la revendication 1,
**caractérisé en ce que**
la partie fonctionnelle se présente sous la forme d'un accoudoir (6) basculant raccordé au siège.

3. Ensemble de sièges selon la revendication 1,
**caractérisé en ce que**
le dispositif de couplage (19) consiste essentiellement en un arbre rainuré (20) dont la partie centrale est raccordée de manière rigide à la section postérieure de l'accoudoir (6), **en ce que** les extrémités de l'arbre sont dotées de rainures (23, 24) périphériques et enfin, **en ce que** les dites rainures (23, 24) reçoivent des éléments de raccordement correspondants avec des bâtis de sièges (21, 22, 29A, 29B), les dits bâtis entraînant, suite au mouvement de rotation de l'arbre rainuré (20) un changement de position des bâtis de sièges (21, 22).

4. Ensemble de sièges selon une des revendications 1 à 3, **caractérisé en ce que**
l'élément de siège (3B, 4B, 5B) peut basculer, l'axe de basculement (18) étant situé près de l'arête postérieure de l'élément de siège, de manière rigide par rapport au cadre porteur (7).

5. Ensemble de sièges selon la revendication 4, si dépendant de la revendication 3, et
**caractérisé en ce que**
un lien de solidarité (25, 26, 27) a été prévu entre l'élément de siège basculant (3B, 4B, 5B) et le dispositif de couplage (19), l'arbre rainuré (20) étant essentiellement raccordée à un levier de dossier (25), l'extrémité libre du levier de dossier (25) étant guidée dans une coulisse (27), la coulisse (27) étant disposée à une extrémité d'un levier de siège (26) angulaire et l'autre extrémité du levier de siège (26) reposant dans la section antérieure d'un côté du bâti de siège (22).

6. Ensemble de sièges selon une des revendications 2 à 5, si dépendant de la revendication 2, et
**caractérisé en ce que**
le dossier (3A, 4A, 5A) est doté d'évidements (14) dans lesquels les accoudoirs en position basculée s'insèrent.

7. Ensemble de sièges selon une des revendications 1 à 6, **caractérisé en ce que**
Le rail de guidage (16, 17) est constitué d'un ou plusieurs tube(s)-support(s).

8. Ensemble de sièges selon une des revendications 1 à 7, **caractérisé en ce que**
un cadre élastique (29A, 29B, 29C) constitué de préférence de ressorts à lames a été prévu contre l'élément de siège (3B, 4B, 5B).

9. Ensemble de sièges selon une des revendications 1 à 8, **caractérisé en ce que**
L'élément de siège (3B, 4B, 5B) présente un rembourrage de siège avec des propriétés semblables à celles de ressorts.

10. Ensemble de sièges d'une cabine d'avion avec cadre porteur (7) supportant plusieurs sièges (3,4,5) constitués chacun d'un élément de siège (3B, 4B, 5B) et d'un dossier (3A, 4A, SA), les sièges (3,4, 5) étant disposés de manière à pouvoir coulisser longitudinalement sur au moins un rail de guidage commun,
**caractérisé en ce que**
au moins sous un élément de siège (3B, 4B, 5B), un cadre élastique (29A, 29B, 29C) pourvu de préférence de ressorts à lames a été prévu, ledit cadre étant raccordé à un élément de guidage lui-même raccordé au siège, et provoquant, en cas de charge par ressort, un mouvement direct du siège sur le rail de guidage (16, 17).
